# EUROPEAN PATENT APPLICATION

(11) **EP 1 666 961 A1**
(43) Date of publication of application: **07.06.2006**
(21) Application number: 05025805.2
(22) Date of filing: 25.11.2005
(51) Int. Cl.: G02F 1/1347, G09G 3/34, G02F 1/133

(54) **Transflective liquid crystal display device and electronic device equipped with the same**

(30) Priority: 02.12.2004 JP 2004350051
(71) Applicant: NEC Corporation, Minato-ku Tokyo (JP)
(72) Inventor: Uchikawa, Tatsuya NEC Corporation, Tokyo (JP)
(74) Representative: Baronetzky, Klaus

(57) **Abstract**

A liquid crystal display device, that can display images in an optimal display mode by switching it from one mode to another when the backlight luminance is set to secure good visibility in any environment, has a liquid crystal panel (1) for display, a backlight unit (3) provided to the backside of the panel to illuminate the panel and provided with a backlight controlling unit (13) setting a value of the luminance, a display switching liquid crystal panel (2) provided between the liquid crystal panel and the backlight unit which can switch between a reflective mode for reflecting external light and a transmissive mode for allowing the backlight from the backlight unit to pass through, and a display mode controlling (9) unit which controls switching of the display switching liquid crystal panel between the reflective mode and the transmissive display mode, depending on the value of the backlight luminance set in the backlight unit.

## Description

### Background of the Invention

### 1. Field of the Invention

The present invention relates to a liquid crystal display device and an electronic device equipped with the liquid crystal display device. More specifically, the present invention relates to a liquid crystal display device which has liquid crystal panels and a backlight and is capable of switching display modes between a reflective display mode and a transmissive display mode, and to an electronic device equipped with the liquid crystal display device.

### 2. Description of the Related Art

Portable devices, such as mobile communication terminals (e.g., cellular phones) and mobile terminal devices, are used in any environment; indoor or outdoor. For this reason, their display devices are required to have good visibility in any environment. Some display devices of portable devices are provided with a semi-transmissive liquid crystal display device that has internal transmissive and reflective parts. For display, the semi-transmissive liquid crystal display device can switch between two different display modes: the reflective display mode that displays images by reflecting external light, and the transmissive displays mode that display images through use of an internal backlight.

The reflective display mode and the transmissive display mode each has its own drawbacks: the reflective display mode is suitable for well-lighted (bright) conditions (e.g., outdoor) but not for .low-lighted (dark) conditions, and the transmissive display mode is suitable for low-lighted conditions (e.g., indoor) but, by contrast, has a dark display under well-lighted conditions.

Semi-transmissive liquid crystal display devices, therefore, select either the reflective display mode or the transmissive display mode to secure a certain degree of visibility in any environment - from indoor to outdoor.

There has been problems, however, that semi-transmissive liquid crystal display devices do not necessarily have good visibility and moreover, are not provided with a function that enables users to select display mode of their choice, such as the reflective display mode or the transmissive display mode.

A "liquid crystal display device" capable of providing light display images under both of the reflective display mode and the transmissive display mode by use of a liquid crystal cell for switching display modes is disclosed in Japanese Patent Laid-Open No.2002-090773, and a "liquid crystal display device" capable of automatically switching display modes from the reflective display mode to the transmissive display mode and vice versa by use of an illumination sensor, in response to changes in the illuminance is disclosed in Japanese Patent Laid-Open No.Hei05-289059 as related arts.

The foregoing conventional liquid crystal display devices, however, have not been provided with a function that switches display modes from one display mode to another in conjunction with the setting condition of the backlight luminance by users. For this reason, an optimal display mode has not always been selected at the time when the backlight luminance is set in a certain degree of luminance.

### Summary of the Invention

The present invention was made to solve the foregoing and other exemplary problems, drawbacks, and disadvantages of the conventional structures.

In view of the problems, drawbacks, and disadvantages, the first exemplary feature of the present invention is to provide a liquid crystal display device that can display images in an optimal display mode by switching it from one display mode to another at the time when a user sets the backlight luminance of his/her choice, in order to secure good visibility in any environment - from indoor to outdoor.

The second exemplary feature of the present invention is to provide an electronic device equipped with such a liquid crystal display device as described above.

In an exemplary embodiment of the present invention to attain the first object, a liquid crystal display device has a liquid crystal panel for display; a backlight unit provided to the backside of the liquid crystal panel to illuminate the liquid crystal panel as a backlight, and having a capability of setting value of luminance of the backlight; a backlight controlling unit which has a capability of setting value of the luminance of the backlight and controls the luminance of the backlight; a display switching liquid crystal panel provided between the liquid crystal panel and the backlight unit, which can switch modes between a reflective mode for reflecting external light to be used as a reflective display mode and a transmissive mode for allowing the backlight from the backlight unit to pass through to be used as a transmissive display mode; and a display mode control unit which controls switching of the display switching liquid crystal panel being one of the reflective mode and the transmissive mode depending on the value of the luminance of the backlight being set for the backlight unit.

In an exemplary embodiment of the present invention to attain the second object, an electronic device equipped with a liquid crystal display device which has a liquid crystal panel for display; a backlight unit provided to the backside of the liquid crystal panel to illuminate the liquid crystal panel as a backlight, and having a capability of being controlled the luminance of the backlight; a backlight controlling unit, which has a capability of setting value of the luminance of the backlight and controls the luminance of the backlight; a display switching liquid crystal panel, provided between the liquid crystal panel and the backlight unit, which can switch modes between a reflective mode for reflecting external light to be used as a reflective display mode and a transmissive mode for allowing the backlight from the backlight unit to pass through to be used as a transmissive display mode; and a display mode controlling unit, which controls switching of the display switching liquid crystal panel being one of the reflective mode and the transmissive mode depending on the value of the luminance of the backlight being set in the backlight unit.

The liquid crystal display device and electronic device of the present invention can display images in display modes that are optimal for the environment where they are used, by allowing display mode switching control to operate together with backlight luminance control.

### Brief Description of the Drawings

The above and other objects, features and advantages of the present invention will become more apparent form the following detailed description when taken in conjunction with the accompanying drawings wherein:
FIG. 1 is a schematic cross section showing a liquid crystal display device of a first embodiment of the present invention, which is set to the transmissive display mode;
FIG. 2 is a schematic cross section showing the liquid crystal display device of the first embodiment of the present invention, which is set to the reflective display mode;
FIG. 3 is a block diagram showing the configuration of the liquid crystal display device of the first embodiment of the present invention;
FIG. 4 is a flowchart showing the operation of the liquid crystal display device of the first embodiment of the present invention;
FIG. 5 is a block diagram showing the configuration of a liquid crystal display device of a second embodiment of the present invention;
FIG. 6 is a flowchart showing a part of the operation of the liquid crystal display device of the second embodiment of the present invention;
FIG. 7 is a flowchart showing a part of the operation of the liquid crystal display device of the second embodiment of the present invention, a flowchart showing the operation that is executed when a predetermined condition is satisfied in the operation shown in FIG. 6;
FIG. 8 is a block diagram showing the configuration of a liquid crystal display device of a third embodiment of the present invention;
FIG. 9 is a data table showing the relation between the external illuminance and the set values of backlight luminance; and
FIG. 10 is a block diagram showing an electronic device of a fourth embodiment of the present invention.

### Description of the Exemplary Embodiments

### 1. First embodiment

The configuration of a liquid crystal display device of a first embodiment of the present invention will be described.

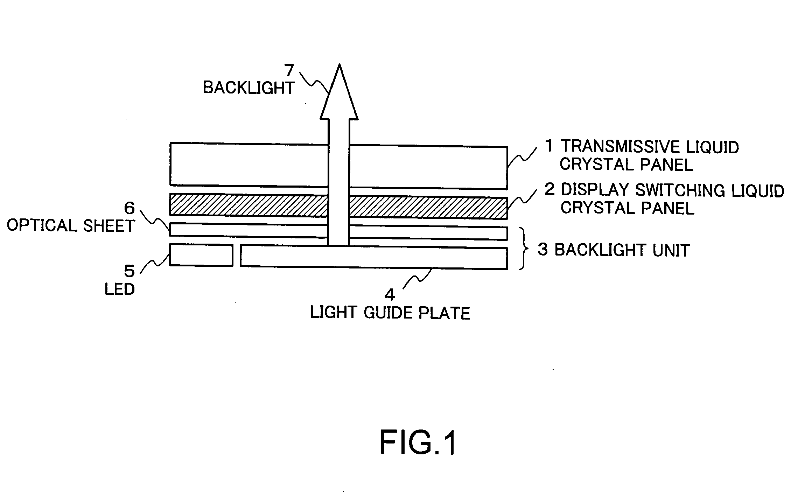

As shown in FIG. 1, the liquid crystal display device (hereinafter referred to as "LCD device") of this embodiment has a transmissive liquid crystal panel 1 for display. In addition, the LCD device includes a backlight unit 3 for illuminating the transmissive liquid crystal panel 1 from behind, and an optical sheet 6 as a polarizing plate. The backlight unit 3 includes a light guide plate 4 and an LED 5. Furthermore, a display switching liquid crystal panel 2 for switching display mode is provided between the transmissive liquid crystal panel 1 and the backlight unit 3. The display switching liquid crystal panel 2 is configured of liquid crystal, a polarizing plate and an optical sheet, so that it operates as a transmissive panel while a voltage is not applied thereto and operates as a reflective mirror while a voltage is applied thereto.

In the LCD device of this embodiment, as shown in FIG. 1, a voltage is not applied to the display switching liquid crystal panel 2, for example, during indoor use, thus allowing it to operate as a transmissive panel. At this time, backlight 7 by the backlight unit 3 directly enters the transmissive liquid crystal panel 1. The transmissive liquid crystal panel 1 blocks or allows the backlight 7 by the backlight unit 3 to pass through it for image display, depending on the displayed image content (transmissive display mode).

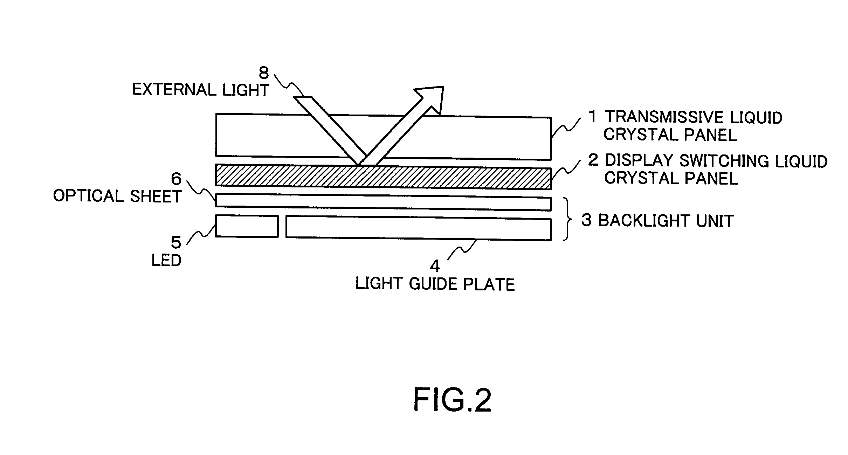

Meanwhile, as shown in FIG. 2, a voltage is applied to the display switching liquid crystal panel 2, for example, during outdoor use, thus allowing it to operate as a mirror. At this time, external light 8 (e.g., solar light) enters the transmissive liquid crystal panel 1 from its surface, reflected by the mirrored display switching liquid crystal panel 2, and enters the transmissive liquid crystal panel 1 again. The transmissive liquid crystal panel 1 blocks or allows the reflected external light 8 to pass through it for image display, depending on the displayed image content (reflective display mode).

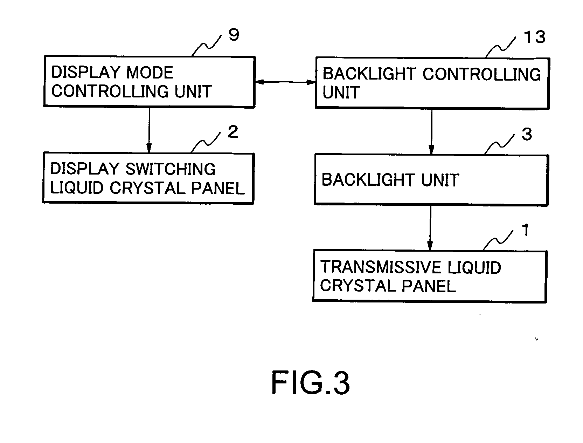

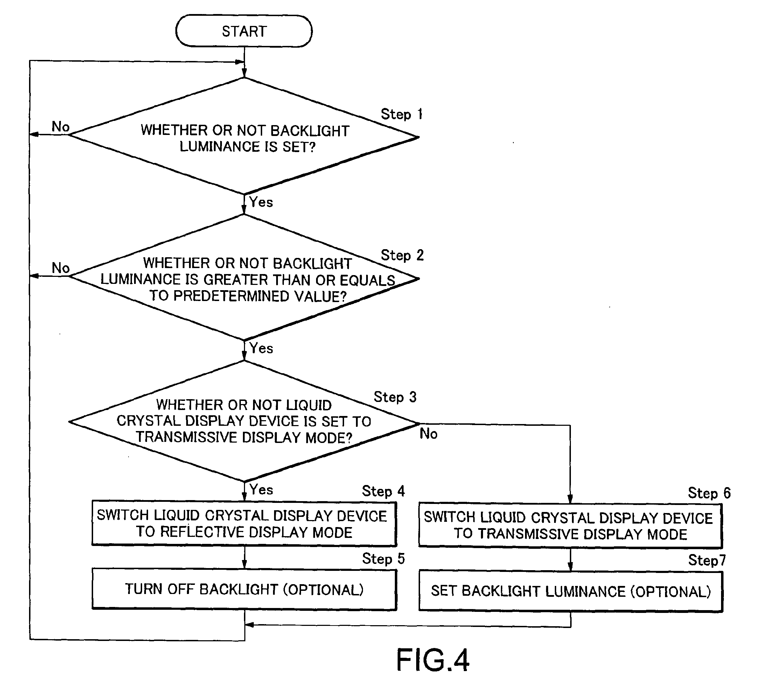

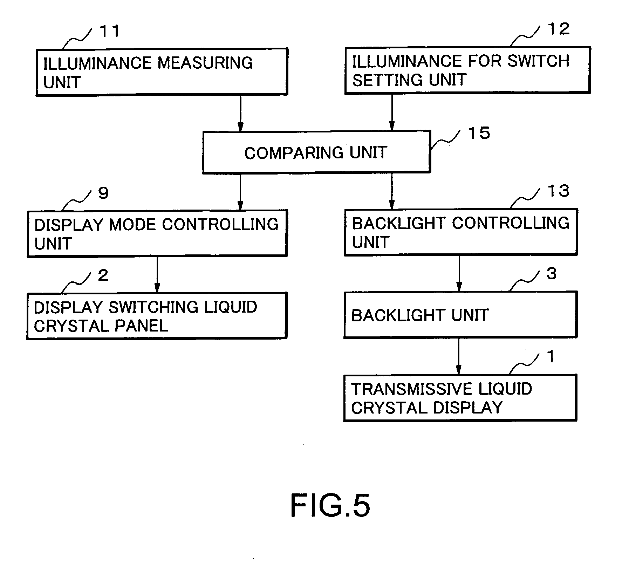

Next, the control operation of the LCD device of this embodiment will be described. FIG. 3 shows a control system of the LCD device of this embodiment. Each of arrows in FIG. 3 represents respective relationships between functional units provided in this embodiment. They represent, for example, transmission/reception of control signals or a variety of information (the same is also applied to FIGs. 4 and 5).

As shown in FIG. 3, the LCD device of this embodiment includes backlight controlling unit 13 for setting luminance conditions of the backlight unit 3. Here, setting of the backlight luminance condition includes switching the backlight unit 3 on and off. In addition, the LCD device has display mode controlling unit 9 for controlling the voltage to be applied to the display switching liquid crystal panel 2 to switch it between the transmissive mode and the reflective mode. The backlight controlling unit 13 and the display mode controlling unit 9 mutually operate in conjunction with each other.

FIG. 4 is a flowchart showing the operation of the LCD device. The method of controlling the LCD device will be described in detail with reference to FIGs. 3 and 4. When a user sets the backlight luminance condition (Step 1), the LCD device first determines whether or not the set value of luminance is greater than or equals to a predetermined value (Step 2), and determines the display mode at that time (Step 3).

When the LCD device is in the transmissive display mode, the display mode controlling unit 9 switches it to the reflective display mode (Step 4). To be more specific, the display mode controlling unit 9 makes the display switching liquid crystal panel 2 to be in on-state (a voltage applied) in order to switch the LCD device to the reflective mode. Furthermore, at this time, the backlight controlling unit 13 may turn off the backlight unit 3 (Step 5). Although execution of Step 5 is optional, it is advantageous to execute it in light of reduction in power consumption.

A specific example that applies to the foregoing case is as follows: a maximum value of luminance is set for the backlight during the transmissive display mode, and a user tries an instruction to increase the value of luminance of the backlight furthermore. This means that the user recognizes that the display screen is dark and poor in visibility, even though a maximum value of luminance is set for the backlight. In this case, it is highly-likely that the LCD device is used in an environment that is not suitable for the transmissive display mode, and therefore, it is switched to the reflective display mode. When the LCD device has poorer visibility in the reflective display mode than in the transmissive display mode, it may, of course, be switched back to the transmissive display mode by a manual operation by the user.

In addition, if it is determined in Step 3 that the LCD device is in the reflective display mode, the display mode controlling unit 9 switches it to the transmissive display mode (Step 6). To be more specific, the display mode controlling unit 9 makes the display switching liquid crystal panel 2 to be in off-state (a voltage not applied) in order to switch the LCD device to the transmissive mode. Furthermore, at this time, the backlight controlling unit 13 turns on the backlight unit 3. When turning on the backlight unit 3, the value of luminance of it may be automatically set, for example, to the maximum (Step 7).

An example that applies to the foregoing case is as follows: a user tries to increase the value of luminance of the backlight which is not turned on. This means that the user recognizes that the display screen is dark and poor in visibility in the reflective display mode. In this case, it is highly likely that the LCD device is used in such an environment that is not suitable for the reflective display mode, and therefore, it is switched to the transmissive displaymode. When the LCD device has poorer visibility in the transmissive display mode than in the reflective display mode, it may, of course, be switched back to the reflective display mode by a manual operation by the user.

As described above, the LCD device of this embodiment can be switched to the optimal display modes on the basis of setting value of the luminance of the backlight unit 3. For example, increasing the value of luminance of the backlight unit 3 to a predetermined value or more when the LCD device is set to the reflective display mode during outdoor use causes it to automatically switch to the transmissive display mode, thereby improves visibility.

By contrast, increasing the value of luminance of the backlight to a maximum value or more during the transmissive display mode causes the LCD device to automatically switch to the reflective display mode to improve visibility. The backlight unit 3 becomes no longer necessary in the case, and the backlight unit 3 is switched off, which causes power consumption to reduce, in the mutual control operation of display mode switching control and luminance control for the backlight unit 3.

It should be noted that the gist of the present invention is to switch display modes depending on the setting conditions of the luminance of the backlight unit 3. Accordingly, although the LCD device is set to the transmissive display mode for indoor use and to the reflective display mode for outdoor use in the first embodiment, this setting is merely an example and it is obvious that there is no need to fix the relation between the use environment and the display mode.

Furthermore, switching control for the display switching liquid crystal panel 2 may be achieved by a manual operation by users. Specifically, users may select either the transmissive display mode or the reflective display mode to control the display switching liquid crystal panel 2 through the display mode controlling unit 9 which uses software control of a mobile communication terminal or the like equipped with the LCD device.

For backlight luminance control, the following methods can be adopted: controlling the magnitude of the current flowing in the backlight unit 3; controlling the voltage applied to the backlight unit 3; and controlling the ratio between the time in which current flows and the time in which no current flows. Thus, it is possible to adopt general methods to control the backlight luminance, and a detailed description thereof is omitted because they are irrelevant to the gist of the present invention.

### 2. Second embodiment

In a second embodiment there is provided an optical sensor for measuring the external illuminance in addition to the configuration of the first embodiment. By coupling the output of the optical sensor with the switching liquid crystal panel 2, the LCD device automatically recognizes the environment where it is used and automatically selects the optimal display mode.

As shown in FIG. 5, the LCD device of this embodiment includes, in addition to the configuration of the first embodiment, an illuminance measuring unit 11 such as an optical sensor for measuring the external illuminance. Furthermore, the LCD device includes: an illuminance for switch setting unit 12 for setting the illuminance (a reference value) at which the LCD device is switched to either the transmissive display mode or the reflective display mode; and a comparing unit 15 for comparing the illuminance value measured by the illuminance measuring means with the reference illuminance value for switch set by the illuminance for switch setting units 12. Thus "illuminance for switch" is a predetermined reference illuminance value for switch the display mode. The display mode controlling unit 9 then switches the display switching liquid crystal panel 2 to either the transmissive mode or the reflective mode on the basis of the result of comparison made by the comparing unit 15.

The comparing unit 15 compares the received light quantity (equivalent to external illuminance) measured by the illuminance measuring unit 11 with the reference illuminance value previously set by the illuminance for switch setting unit 12.

If the received light quantity measured by the illuminance measuring unit 11 is greater than or equals to the reference illuminance value for switch, the display mode controlling unit 9 then switches the LCD device to the reflective display mode. At this point, the backlight controlling unit 13 may turn off the backlight unit 3.

Whereas if the received light quantity measured by the illuminance measuring unit 11 is less than the reference illuminance value for switch, the display mode controlling unit 9 then switches the LCD device to the transmissive display mode. At this point, the backlight controlling unit 13 may turn on the backlight unit 3.

If the received light quantity measured by the illuminance measuring unit 11 is greater than or equals to the predetermined value when turning on the backlight unit 3, the backlight controlling unit 13 may set a large illuminance value for the backlight unit 3. Whereas if the received light quantity measured by the illuminance measuring unit 11 is less than the predetermined value, the backlight controlling unit 13 may set a small illuminance value for the backlight unit 3.

It should be noted that the second embodiment also has control for switching the display mode of the LCD device in conjunction with the setting conditions such as the value of the luminance of the backlight unit 3, as does the first embodiment. Thus, there are three types of display mode switching conditions: switching based on the setting value of the luminance of the backlight; switching based on the external illuminance; and switching based on the external illuminance in preference to the setting value of the backlight luminance. The mode for switching display modes based on the setting value of the backlight luminance, the mode for switching display mode based on the external illuminance, and the mode for switching display mode based on the external illuminance in preference to the setting value of the backlight luminance are referred to as "backlight luminance mode", "external illuminance mode" and "external illuminance preferred mode", respectively. The mode for switching display modes can be selected from "backlight luminance mode", "external illuminance mode" and "external illuminance preferred mode".

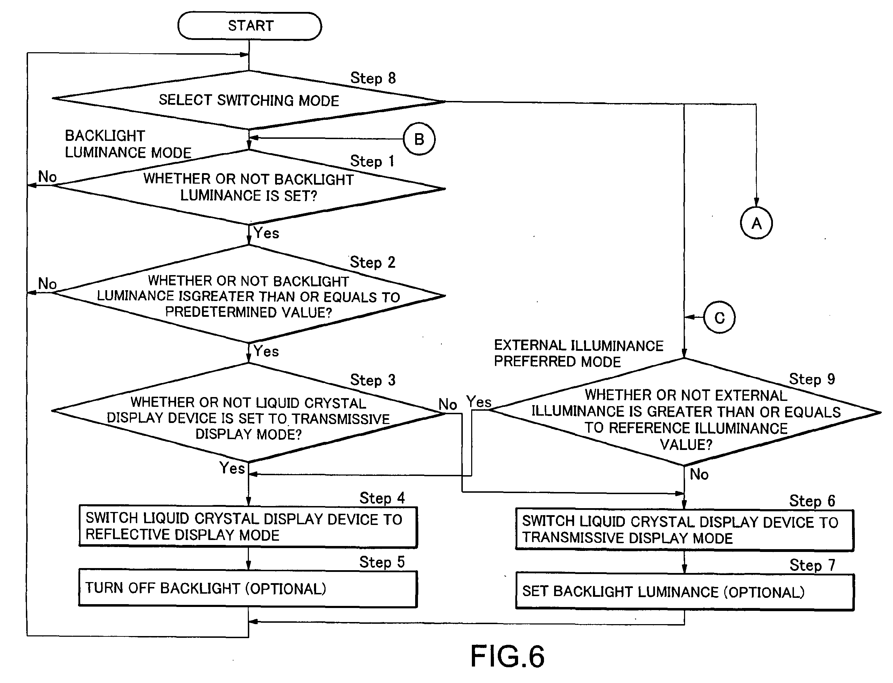

FIG. 6 is a flowchart showing operations executed when switching mode is selected in the first place. Upon selected one of switching modes, the type of the selected switching mode is recognized (Step 8). When the backlight luminance mode is selected, the processing proceeds to Step 1 to determine whether or not the luminance value of the backlight is set. Since operations after Step 1 are similar to those in the first embodiment, descriptions thereof are omitted. Note that, as a method for selecting switching mode, key input or key input combined with a menu selection can be used.

When the external illuminance mode is selected, it is determined whether or not the external illuminance is greater than or equals to the reference illuminance value for switch (Step 9). If it is determined that the external illuminance is greater than or equals to the reference illuminance value for switch, the LCD device is then switched to the reflective display mode (Step 4), and the backlight is turned off (Step 5). Execution of Step 5 is optional. The processing then proceeds to Step 8, where the switching mode is selected and its type is recognized.

When the external illuminance mode is selected and the external illuminance is determined to be less than the reference illuminance value for switch, the LCD device is switched to the transmissive display mode (Step6). The luminance of the backlight is then set to a predetermined value (Step 7). Execution of Step 7 is optional, and the degree of the backlight luminance is not particularly limited. The processing then proceeds to Step 8, where the switching mode is selected and its type is recognized.

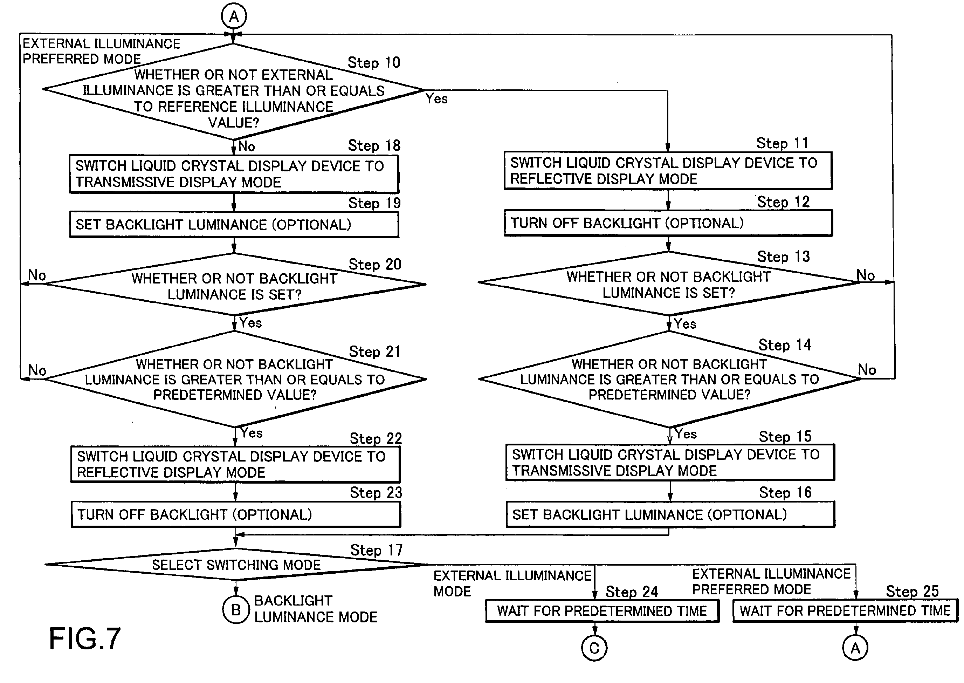

When it is recognized in Step 8 that the external illuminance preferred mode is selected, the processes shown in the flowchart in FIG. 7 are then executed.

FIG. 7 is a flowchart showing operations executed upon selection of the external illuminance preferred mode. When it is recognized in Step 8 in FIG. 6 that the external illuminance preferred mode is selected, it is determined whether or not the external illuminance is greater than or equals to the reference illuminance value for switch (Step 10). If it is determined that the external illuminance is greater than or equals to the reference illuminance value for switch, the LCD device is then switched to the reflective display mode (Step 11), and the backlight is turned off (Step 12). Execution of Step 12 is optional. Subsequently, it is determined whether or not setting the value of the backlight luminance has been made (step 13). If it is determined that setting the value of the backlight luminance has not been made, the processing proceeds to Step 10, where it is determined whether or not the external illuminance is greater than or equals to the reference illuminance value for switch.

If it is determined that luminance value setting has been made, it is determined whether or not the set value of the backlight luminance is greater than or equals to a predetermined value (Step 14). If it is determined that the backlight luminance being set is greater than or equals to the predetermined value, the LCD device is then switched to the transmissive display mode (Step 15). Execution of Step 16 (i.e., setting a value of the backlight luminance) is optional. The processing then proceeds to Step 17 to select switching mode. If the set value of the backlight luminance is determined to be less than the predetermined value, the processing proceeds to Step 10 to determine whether or not the external illuminance is greater than or equals to the reference illuminance value for switch.

If the external illuminance is determined to be less than the reference illuminance value for switch, the LCD device is then switched to the transmissive display mode (Step 18), and the value of the backlight luminance is set (Step 19). Execution of Step 19 is optional. Subsequently, it is determined whether or not setting of the backlight luminance has been made (Step 20). If it is determined that setting the value of the backlight luminance has not been made, the processing proceeds to Step 8 in FIG. 6, where it is determined whether or not the external illuminance is greater than or equals to the reference illuminance value for switch.

If it is determined that luminance value setting for the backlight has been made, it is determined whether or not the set value of the backlight luminance is greater than or equals to the predetermined value (Step 21). If it is determined that the set value of the backlight illuminance is greater than or equals to that predetermined value, the LCD device is switched to the reflective display mode (Step 22). Execution of Step 23 (i.e., turning off of the backlight) is optional. The processing then proceeds to Step 17 to select the switching mode. If it is determined that the set value of the backlight luminance is less than the predetermined value, the processing proceeds to Step 10 to determine whether or not the external illuminance is greater than or equals to the reference illuminance value for switch.

Also in Step 17, both selection of the switching mode and recognition of its type are carried out as done in Step 8 in FIG. 6. When the backlight luminance mode is selected, the processing proceeds to Step 1 in FIG. 6 (the first process in the backlight luminance mode). When the external illuminance mode is selected, the processing waits for a predetermined time (Step 24), and proceeds to Step 9 in FIG. 6 (the first process in the external illuminance mode). When the external illuminance preferred mode is selected, the processing waits for a predetermined time (Step 25), and proceeds to Step 10 (the first process in the external illuminance preferred mode).

The reason why the processing waits for a predetermined time before proceeding to the next step in either the external illuminance mode or the external illuminance preferred mode is to prevent the LCD device from switching back to the original display mode depending on the degree of the external illuminance value immediately after switching to other display mode.

For example, the LCD device is switched to the transmissive display mode when the external illuminance is determined to be less than the reference illuminance value for switch (Step 18), and then switched to the reflective display mode as a result of the processings of Steps 19 to 22. In this case, if the processing immediately proceeds to Step 9 or Step 10 for the determination of the external illuminance, the LCD device undesirably switches back to the reflective display mode if the external illuminance has not changed. If the LCD device continuously switches back and forth between display modes in this way, visibility is significantly reduced, and display mode switching achieved by the setting value of the backlight luminance is ignored.

Thus, when the LCD device has switched from one display mode to another as a result of the setting value of the backlight luminance in the backlight luminance mode, the processing is adapted to wait for a certain period of time so that changes in the external illuminance is expected, before proceeding to either the external illuminance mode or the external illuminance preferred mode.

Similarly, even when the LCD device switches to the reflective display mode because the external illuminance is greater than or equals to the reference illuminance value for switch (Step 11) and then switches to the transmissive display mode as a result of the setting value of the backlight luminance (Step 15), the processing waits for a predetermined period of time before proceeding to the next step.

Note that the foregoing predetermined period of time (i.e., waiting time before proceeding to the next step) is set on an arbitrary basis, and may be set to several seconds, several minutes or even longer. Alternatively, it may be set to zero by accepting the problems described above.

As described above, the LCD device of the second embodiment sets its display mode and controls turning on/off of the backlight unit 3 and its luminance according to the received light quantity measured by illuminance measuring unit 11. Thus, it can display images in the optimal display mode by determining, based on the external illuminance, the environment where it is used (e.g., indoor or outdoor). 3. Third embodiment

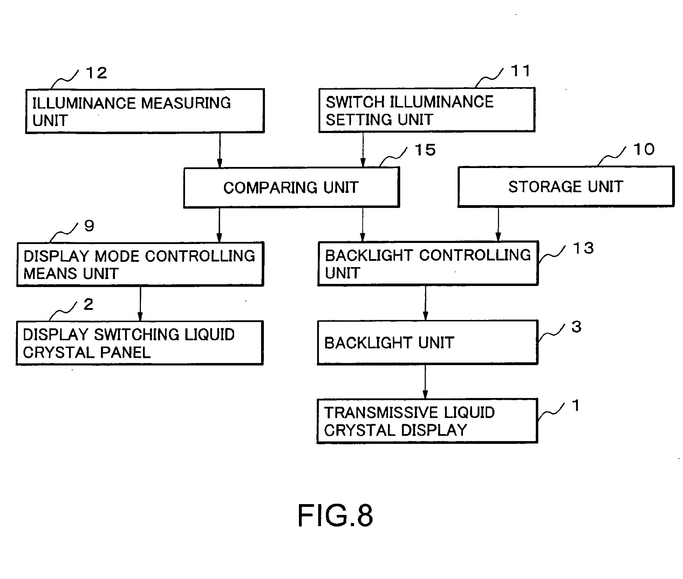

As shown in FIG. 8, the LCD device of a third embodiment includes, in addition to the configuration of the second embodiment, storage unit 10 for storing a data table in which the value of the received light quantity measured by the illuminance measuring unit 11 is previously related to the value of the backlight luminance. However, means actually used for determining the luminance of the backlight unit 3 is not limited.

For example, the comparing unit 15 may refer to both the received light quantity measured by the illuminance measuring unit 11 and the data table stored in the storage unit 10 to determine the value of the backlight luminance, and the backlight controlling unit 13 may control the backlight unit 3 so that it has the determined value of the luminance.

Alternatively, the backlight controlling unit 13 may determine the value of the luminance of the backlight unit 3 based on the received light quantity measured by the illuminance measuring unit 11 and on the data table stored in the storage unit 10. If the backlight controlling unit 13 determines the value of the backlight luminance, both the illuminance for switch setting unit 12 and the comparing unit 15 shown in FIG. 5 do not necessarily have to be provided as the elements of the present invention.

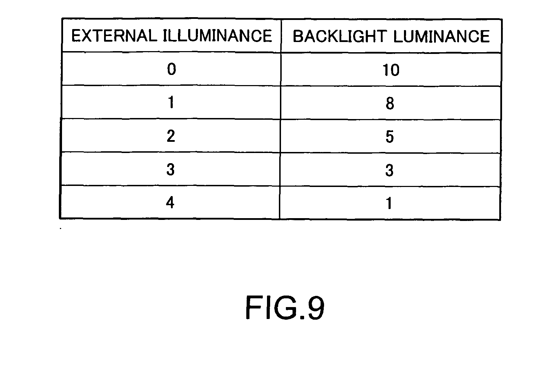

FIG. 9 is an example of a data table showing the relation between external illuminance and backlight luminance. Thus, the backlight luminance is set in relation to the external illuminance. Any unit can be adopted as the unit of illuminance as long as it can represent the magnitude of illuminance: lux, a unit of illuminance, or output current or voltage from the illuminance measuring unit 11, may be adopted. The interval between external illuminance values, related to the backlight luminance, is also set on an arbitrary basis: values may be shown at either equal or unequal intervals. In addition, any unit can be adopted for the unit of backlight luminance as long as it can represent the magnitude of luminance: nit, a unit of luminance, or any appropriate values which correspond one-to-one with luminance, may be adopted.

Any method can be adopted as the method of relating the external illuminance value to the backlight luminance value: backlight luminance value may increase with reducing the external illuminance value, or backlight luminance may be constant in a certain external illuminance range.

The data table can be stored in an appropriate address of the storage means such as a memory.

Setting of the luminance value of the backlight unit 3 using this data table is performed in the step of the second embodiment where the luminance value of the backlight unit 3 is set based on the external illuminance. To be more specific, the luminance value of the backlight unit 3 is set in Step 7 in FIG. 6 and Step 19 in FIG. 7 using the data table. Since the contents of other processing are the same as those of the second embodiment, the description thereof is omitted.

As described above, the LCD device of the third embodiment has a data table in which the external illuminance value is related to the backlight luminance value, and therefore, it is possible to set the backlight luminance value in detail on the basis of the external illuminance value. Thus, it is possible to further improve visibility in the transmissive display mode.

### 4. Fourth embodiment

The LCD devices described in the foregoing embodiments can be applied to any electronic device equipped with an LCD device, including portable devices such as cellular phones and PDAs due to the following reasons. Electronic devices may be used in any environment - from indoor to outdoor, and the illuminance around them is not always constant. Moreover, the illuminance of light source is not always constant even when they are used indoor. Therefore, manually or automatically selecting either the transmissive display mode or the reflective display mode depending on the external illuminance is effective in improving visibility and in reducing power consumption.

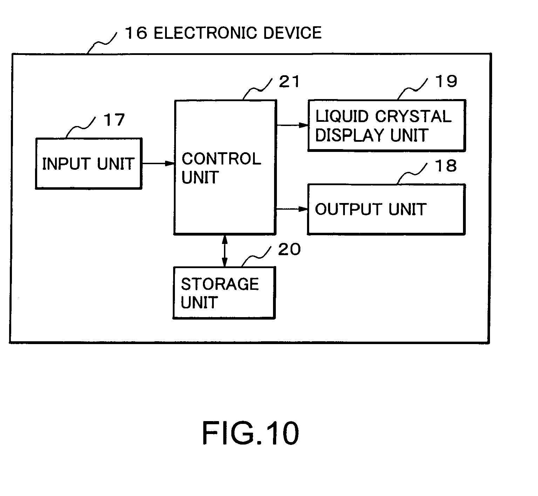

FIG. 10 is a block diagram of an embodiment of an electronic device equipped with an LCD device. An electronic device 16 of this embodiment includes: an input unit 17 for key input and the like; an output unit 18 for outputting voices and the like; a liquid crystal display unit 19 for display through use of liquid crystal; and a storage unit 20 for storing required information. The electronic device 16 further includes a control unit 21 for controlling the entire electronic device 16 using software or the like.

As described above, the electronic device 16 is a general electronic device having a liquid crystal display function, and the functions of the input unit 17, output unit 18 and control unit 21 are not particularly limited.

The liquid crystal display unit 19 includes all functions the first embodiment has. Specifically, the liquid crystal display unit 19 includes the transmissive liquid crystal panel 1, display switching liquid crystal panel 2, backlight unit 3, display mode controlling unit 9 and backlight controlling unit 13. The liquid crystal display unit 19 may include the illuminance measuring unit 11, illuminance for switch setting unit 12 and comparing unit 15, which are provided only to the second embodiment. The liquid crystal display unit 19 may also include the storage unit 10, which is provided only to the third embodiment.

The software processing function and the storage means 20 which the controlling means 21 has can be used for the control of the liquid crystal display unit 19. For example, the display mode controlling unit 9, backlight controlling unit 13 and comparing unit 15 may be processed as a part of the function of the control unit, and the illuminance for switch setting unit 12 may be processed as a part of the storage unit. The storage unit 10 may also be realized by use of the storage unit 20. For this reason, provision of a specific configuration is not necessarily required for the realization of these means.

Thus, the electronic device 16 having the liquid crystal display unit 19 can realize not only the original functions the electronic device 16 has, but also the functions of the LCD device of the present invention. Accordingly, it is possible to display images in the optimal display mode while securing good visibility in any environment.

While this invention has been described in connection with certain exemplary embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

Further, it is the inventor's intent to retain all equivalents of the claimed invention even if the claims are amended during prosecution.

## Claims

1. A liquid crystal display device, comprising:
a liquid crystal panel for display;
a backlight unit provided to the backside of the liquid crystal panel to illuminate the liquid crystal panel as a backlight, and having a capability of being controlled the luminance of the backlight;
a backlight controlling unit, which has a capability of controlling the backlight unit for setting value of the luminance of the backlight;
a display switching liquid crystal panel, provided between the liquid crystal panel and the backlight unit, which can switch modes between a reflective mode for reflecting external light to be used as a reflective display mode and a transmissive mode for allowing the backlight from the backlight unit to pass through to be used as a transmissive display mode; and
a display mode controlling unit, which controls switching of the display switching liquid crystal panel being one of the reflective mode and the transmissive mode depending on the value of the luminance of the backlight being set in the backlight unit.

2. The liquid crystal display device according to claim 1,
wherein the display mode controlling unit controls the display switching liquid crystal panel to switch to an opposite mode of the reflective mode or the transmissive mode when the value of the luminance of the backlight set by the backlight controlling unit is greater than or equals to a predetermined value.

3. The liquid crystal display device according to claim 1,
wherein the backlight controlling unit controls the luminance of the backlight including on and off control of the backlight, turns off the backlight during the transmissive display mode and turns on the backlight during the reflective display mode.

4. The liquid crystal display device according to claim 2,
wherein the backlight controlling unit controls the luminance of the backlight including on and off control of the backlight, turns off the backlight during the transmissive display mode and turns on the backlight during the reflective display mode.

5. The liquid crystal display device according to claim 1,
further comprising;
an illuminance measuring unit to measure the external illuminance;
a reference illuminance setting unit to set a reference illuminance value for switching to any one of the reflective display mode and the transmissive display mode;
a comparing unit to compare the result of the measurement of the external illuminance by the illuminance measuring unit with the reference illuminance value; and
wherein the display mode controlling unit controls switching of the display switching liquid crystal panel being one of the reflective mode and the transmissive mode, according to the result of comparison by the comparing unit.

6. The liquid crystal display device according to claim 2, further comprising;
an illuminance measuring unit to measure the external illuminance;
a reference illuminance setting unit to set a reference illuminance value for switching to any one of the reflective display mode and the transmissive display mode;
a comparing unit to compare the result of the measurement of the external illuminance by the illuminance measuring unit with the reference illuminance value; and
wherein the display mode controlling unit controls switching of the display switching liquid crystal panel being one of the reflective mode and the transmissive mode, according to the result of comparison by the comparing unit.

7. The liquid crystal display device according to claim 3, further comprising;
an illuminance measuring unit to measure the external illuminance;
a reference illuminance setting unit to set a reference illuminance value for switching to any one of the reflective display mode and the transmissive display mode;
a comparing unit to compare the result of the measurement of the external illuminance by the illuminance measuring unit with the reference illuminance value; and
wherein the display mode controlling unit controls switching of the display switching liquid crystal panel being one of the reflective mode and the transmissive mode, according to the result of comparison by the comparing unit.

8. The liquid crystal display device according to claim 4,
further comprising;
an illuminance measuring unit to measure the external illuminance;
a reference illuminance setting unit to set a reference illuminance value for switching to any one of the reflective display mode and the transmissive display mode;
a comparing unit to compare the result of the measurement of the external illuminance by the illuminance measuring unit with the reference illuminance value; and
wherein the display mode controlling unit controls switching of the display switching liquid crystal panel being one of the reflective mode and the transmissive mode, according to the result of comparison by the comparing unit.

9. The liquid crystal display device according to claim 7,
wherein the display mode controlling unit controls the display switching liquid crystal panel to switch to the reflective mode and the backlight controlling unit turns off the backlight, if the result of comparison by the comparing unit indicates that the external illuminance is greater than or equals to the reference illuminance value; and
wherein the display mode controlling unit controls the display switching liquid crystal panel to switch to the transmissive mode and the backlight controlling unit turns on the backlight, if the result of comparison by the comparing unit indicates that the external illuminance is less than the reference illuminance value.

10. The liquid crystal display device according to claim 8,
wherein the display mode controlling unit controls the display switching liquid crystal panel to switch to the reflective mode and the backlight controlling unit turns off the backlight, if the result of comparison by the comparing unit indicates that the external illuminance is greater than or equals to the reference illuminance value; and
wherein the display mode controlling unit controls the display switching liquid crystal panel to switch to the transmissive mode and the backlight controlling unit turns on the backlight, if the result of comparison by the comparing unit indicates that the external illuminance is less than the reference illuminance value.

11. The liquid crystal display device according to claim 9,
further comprising;
a storage unit to store a data table in which the result of measurement of the external illuminance is related to the value of luminance of the backlight;
wherein the display mode controlling unit controls switching of the display switching liquid crystal panel being one of the reflective mode and the transmissive mode based on the result of measurement of the external illuminance by the illuminance measuring unit and on the data table and the backlight controlling unit controls the luminance of the backlight being set based on the result of measurement of the external illuminance and on the data table.

12. The liquid crystal display device according to claim 10,
further comprising;
a storage unit to store a data table in which the result of measurement of the external illuminance is related to the value of luminance of the backlight;
' wherein the display mode controlling unit controls switching of the display switching liquid crystal panel being one of the reflective mode and the transmissive mode based on the result of measurement of the external illuminance by the illuminance measuring unit and on the data table and the backlight controlling unit controls the degree of the luminance of the backlight being set based on the result of measurement of the external illuminance and on the data table.

13. An electronic device having a liquid crystal display device, the liquid crystal display device comprising:
a liquid crystal panel for display;
a backlight unit provided to the backside of the liquid crystal panel to illuminate the liquid crystal panel as a backlight, and having a capability of being controlled the luminance of the backlight;
a backlight controlling unit, which has a capability of controlling the backlight unit for setting value of the luminance of the backlight;
a display switching liquid crystal panel, provided between the liquid crystal panel and the backlight unit, which can switch modes between a reflective mode for reflecting external light to be used as a reflective display mode and a transmissive mode for allowing the backlight from the backlight unit to pass through to be used as a transmissive display mode; and
a display mode controlling unit, which controls switching of the display switching liquid crystal panel being one of the reflective mode and the transmissive mode depending on the value of the luminance of the backlight being set in the backlight unit.

14. The electronic device according to claim 13,
wherein the display mode controlling unit controls the display switching liquid crystal panel to switch to an opposite mode of the reflective mode' or the transmissive mode when the value of the luminance of the backlight set by the backlight controlling unit is greater than or equals to a predetermined value; and
wherein the backlight controlling unit controls the luminance of the backlight including on and off control of the backlight, and turns off the backlight during the transmissive display mode and turns on the backlight during the reflective display mode.

15. The electronic device according to claim 14,
further comprising;
an illuminance measuring unit to measure the external illuminance;
a reference illuminance setting unit to set a reference illuminance value for switching to any one of the reflective display mode and the transmissive display mode;
a comparing unit to compare the result of the measurement of the external illuminance by the illuminance measuring unit with the reference illuminance value; and
wherein the display mode controlling unit controls switching of the display switching liquid crystal panel being one of the reflective mode and the transmissive mode, according to the result of comparison by the comparing unit.

16. The electronic device according to claim 15,
wherein the display mode controlling unit controls the display switching liquid crystal panel to switch to the reflective mode and the backlight controlling unit turns off the backlight, if the result of comparison by the comparing unit indicates that the external illuminance is greater than or equals to the reference illuminance value; and
wherein the display mode controlling unit controls the display switching liquid crystal panel to switch to the transmissive mode and the backlight controlling unit turns on the backlight, if the result of comparison by the comparing unit indicates that the external illuminance is less than the reference illuminance value.

17. A method of controlling a liquid crystal display device, comprising the steps of:
setting value of luminance of a backlight provided to the backside of a liquid crystal panel for display in the liquid crystal display device to illuminate the liquid crystal panel; and
controlling of switching of a display switching liquid crystal panel, which is provided between the liquid crystal panel and the backlight unit and can switch modes between a reflective mode for reflecting external light to be used as a reflective display mode and a transmissive mode for allowing the backlight from the backlight unit to pass through to be used as a transmissive display mode, being one of the reflective mode and the transmissive mode depending on the value of the luminance of the backlight being set in the step of the setting value of luminance of the backlight.

18. The method of controlling a liquid crystal display device according to claim 17, further comprising the steps of:'
controlling of switching of the display switching liquid crystal panel to switch to an opposite mode of the reflective mode or the transmissive mode when a value of luminance of the backlight set in the step of the setting value of luminance of the backlight is greater than or equals to a predetermined value;
controlling the of luminance of the backlight including on and off control of the backlight;
turning off the backlight during the transmissive display mode; and
turning on the backlight during the reflective display mode.

19. The method of controlling a liquid crystal display device according to claim 18, further comprising the steps of:
measuring external illuminance;
setting a reference illuminance value for switching to any one of the reflective display mode and the transmissive display mode;
comparing the result of the step of the measuring the external illuminance with the reference illuminance value; and
controlling switching of the display switching liquid crystal panel being one of the reflective mode and the transmissive mode, according to the result of the step of the comparing.

20. The method of controlling a liquid crystal display device according to claim 19, further comprising the steps of:
switching the liquid crystal display device to the reflective mode and turning off the backlight, if the result of the comparing step indicates that the external illuminance is greater than or equals to the reference illuminance value; and
switching the liquid crystal display device to the transmissive mode and turning on the backlight if the result of the comparing step indicates that the external illuminance is less than the reference illuminance value.
